# EUROPEAN PATENT APPLICATION

(11) **EP 4 769 183 A1**
(43) Date of publication of application: **01.07.2026**
(21) Application number: 24829358.1
(22) Date of filing: 30.10.2024
(51) Int. Cl.: G06F 18/214, G06V 20/54, B60W 40/09, G06F 40/30, G06V 20/59

(54) **METHOD FOR TRAINING DRIVING RISK RECOGNITION MODEL, AND DRIVING RISK RECOGNITION METHOD AND APPARATUS**

(71) Applicant: Streamax Technology Co., Ltd., Shenzhen, Guangdong 518000 (CN)
(72) Inventor: LIN, Xunan, Shenzhen, Guangdong 518000 (CN); CHEN, Wei, Shenzhen, Guangdong 518000 (CN); KONG, Guoqiang, Shenzhen, Guangdong 518000 (CN); ZHANG, Jinwang, Shenzhen, Guangdong 518000 (CN)
(74) Representative: Cabinet Netter
(86) International application number: PCT/CN2024/128496
(87) International publication number: WO 2026/090908

(57) **Abstract**

The present application relates to the field of artificial intelligence technology, and provides a method for training a driving risk identification model, a method and a driving risk identification device, including: obtaining data to be processed of a plurality of drivers; determining corresponding events according to the data to be processed; performing a text processing on identifications of the plurality of drivers and the events corresponding to the plurality of drivers to obtain a text processing result; and training a driving risk identification model to be trained according to the text processing result to obtain a trained driving risk identification model. The driving risk identification model to be trained is a large language model, and the trained driving risk identification model is used to output driving risks. The model trained in the above method is more accurate.

## Description

### TECHNICAL FIELD

The present application relates to the field of artificial intelligence technology, and more particularly to a method for training a driving risk identification model, a driving risk identification method and a driving risk identification device, a vehicle-mounted apparatus and a computer-readable storage medium.

### BACKGROUND

With the increase in social traffic flow, the importance of road safety has become increasingly prominent, and the driving behavior of the driver is an important factor affecting road safety.

At present, the driving risk of the driver is usually identified through a recommendation system, and then the driver is reminded based on the identified driving risk. Specifically, the recommendation system extracts features related to driving risk from the current driving data, and then predicts the corresponding driving risk based on the extracted features.

However, when the above method is used to predict driving risk, the accuracy of the prediction result obtained is low.

### SUMMARY

### TECHNICAL PROBLEM

One of the objectives of the embodiments of the present application is to provide a method for training a driving risk identification model, which can solve the problem of low accuracy of driving risk predicted by existing models.

### TECHNICAL SOLUTION

The technical solution adopted by the embodiment of the present application is:
In the first aspect, the embodiment of the present application provides a method for training a driving risk identification model, which includes:
   obtaining data to be processed of a plurality of drivers, and the data to be processed comprises vehicle data and/or non-vehicle data;
   determining corresponding events according to the data to be processed;
   performing a text processing on identifications of the plurality of drivers and the events corresponding to the plurality of drivers to obtain a text processing result; and
   training a driving risk identification model to be trained according to the text processing result to obtain a trained driving risk identification model, and the driving risk identification model to be trained is a large language model, and the trained driving risk identification model is configured to output a driving risk.
In a second aspect, a driving risk identification method is provided, which includes:
   obtaining data to be processed of a driver, and the data to be processed comprises vehicle data and/or non-vehicle data;
   determining a corresponding event according to the data to be processed to obtain a real-time event;
   obtaining historical events and historical alarm information, and the historical events are events determined before the real-time event is determined;
   performing a text processing on the real-time event, the historical events and the historical alarm information to obtain a text to be detected; and
   taking the text to be detected as a trained driving risk identification model as described in the first aspect, to obtain a driving risk output by the trained driving risk identification model.
In a third aspect, a driving risk identification device is provided, which includes:
   a data to be processed obtaining module, configured to obtain data to be processed of a driver, wherein the data to be processed comprises vehicle data and/or non-vehicle data;
   a real-time event determination module, configured to determine a corresponding event according to the data to be processed to obtain a real-time event;
   a historical event obtaining module, configured to obtain historical events and historical alarm information, and the historical events are events determined before the real-time event is determined;
   a text to be detected determination module, configured to perform a text processing on the real-time event, the historical events and the historical alarm information to obtain a text to be detected; and
   a driving risk determination module, configured to take the text to be detected as a trained driving risk identification model as described in the first aspect, to obtain a driving risk output by the trained driving risk identification model.
In a fourth aspect, a vehicle-mounted apparatus is provided, which includes a memory, a processor, and a computer program stored in the memory and executable on the processor. The processor implements the method described in the first aspect when executing the computer program.
In a fifth aspect, a computer-readable storage medium is provided. The computer-readable storage medium stores a computer program. The computer program implements the method described in the first aspect when executed by the processor.
In a sixth aspect, an embodiment of the present application provides a computer program product, which, when executed on a charging management device, enables the charging management device to execute the method described in the first aspect above.

### BENEFICIAL EFFECTS

The beneficial effects of the embodiment of the present application are: in the embodiment of the present application, since the data to be processed includes vehicle data and/or non-vehicle data, and the vehicle data and/or non-vehicle data can affect driving risk, determining the events corresponding to the data to be processed is conducive to obtaining information related to driving risk, so that after training the driving risk identification model according to the text processed events and the identification of the driver, it is conducive to improving the accuracy of the driving risk output by the driving risk identification model. Since the driving risk identification model to be trained is a large language model, and the large language model has logical reasoning ability, after training the driving risk identification model to be trained according to the text processing result, the trained driving risk identification model can identify the logical relationship of the input text and output the corresponding driving risk according to the recognition result. That is, since the trained driving risk identification model obtains driving risk not only according to the input text, but also according to the logical relationship of the input text obtained by inferring the logical relationship according to the trained driving risk recognition model, the accuracy of the obtained driving risk is further improved.

### DESCRIPTION OF THE DRAWINGS

In order to more clearly illustrate the technical solution in the embodiment of the present application, the drawings required for use in the embodiment or exemplary technical description will be briefly introduced below. Obviously, the drawings described below are only some embodiments of the present application. For those skilled in the art, other drawings can also be obtained based on these drawings without creative work.
FIG. 1 is a flow chart of a method for training a driving risk identification model provided in an embodiment of the present application;
FIG. 2 is a flow chart of a driving risk identification method provided in an embodiment of the present application;
FIG. 3 is a structural block diagram of a driving risk identification device provided in an embodiment of the present application; and
FIG. 4 is a structural diagram of a vehicle-mounted apparatus provided in an embodiment of the present application.

### DETAILED DESCRIPTION OF EMBODIMENTS

In the following description, for the purpose of explanation rather than limitation, specific details such as specific system structures and technologies are provided so as to provide a thorough understanding of the embodiments of the present application. However, it should be clear to those skilled in the art that the present application can also be implemented in other embodiments without these specific details. In other cases, detailed descriptions of well-known systems, devices, circuits and methods are omitted to avoid unnecessary details that hinder the description of the present application.

It should be understood that when used in the present application and the appended claims, the term "includes" indicates the presence of the described features, wholes, steps, operations, elements and/or components, but does not exclude the presence or addition of one or more other features, wholes, steps, operations, elements, components and/or their collections.

It should also be understood that the term "and/or" used in the present application and the appended claims refers to any combination of one or more of the associated listed items and all possible combinations, and includes these combinations.

In addition, in the description of the present application and the attached claims, the terms "first", "second", "third", etc. are only used to distinguish the description, and cannot be understood as indicating or implying relative importance.

The reference to "one embodiment" or "some embodiments" described in the present application means that one or more embodiments of the present application include specific features, structures or characteristics described in combination with the embodiment. Therefore, the sentences "in one embodiment", "in some embodiments", "in other embodiments", "in some other embodiments", etc. that appear in different places in the present application do not necessarily refer to the same embodiment, but mean "one or more but not all embodiments", unless otherwise specifically emphasized in other ways.

With the development of the economy, there are more and more vehicles on the road, and the increase in vehicles will increase the probability of traffic accidents. During vehicle driving, the probability of traffic accidents for experienced drivers is usually lower, because experienced drivers usually predict driving risks.

When relying on the driver to predict driving risks, it may happen that the driving risks are not predicted in time, such as when the driver is not paying attention during driving, it is difficult to predict driving risks in time. In order to improve the timeliness of the knowledge of the driver of driving risks, the recommendation system can be used to predict driving risks, and then the driver can be reminded based on the predicted driving risks. Since the recommendation system extracts features related to driving risks from the obtained driving data to predict driving risks, the driving risks obtained by the recommendation system are only related to the driving data itself. However, since the information that the driving data itself can reflect is limited, when the driving risk is predicted only based on the features extracted from the driving data itself, the accuracy of the driving risk obtained is low.

In order to improve the accuracy of the obtained driving risk, the embodiment of the present application provides a method for training a driving risk identification model.

In the method, the corresponding events are determined according to the obtained data to be processed, a text processing is performed on identifications of the driver and the events corresponding to the driver; and then the driving risk identification model to be trained constructed according to the language model is trained according to the obtained text processing result.

The method for training a driving risk identification model provided by the embodiment of the present application is described below in conjunction with the accompanying drawings.

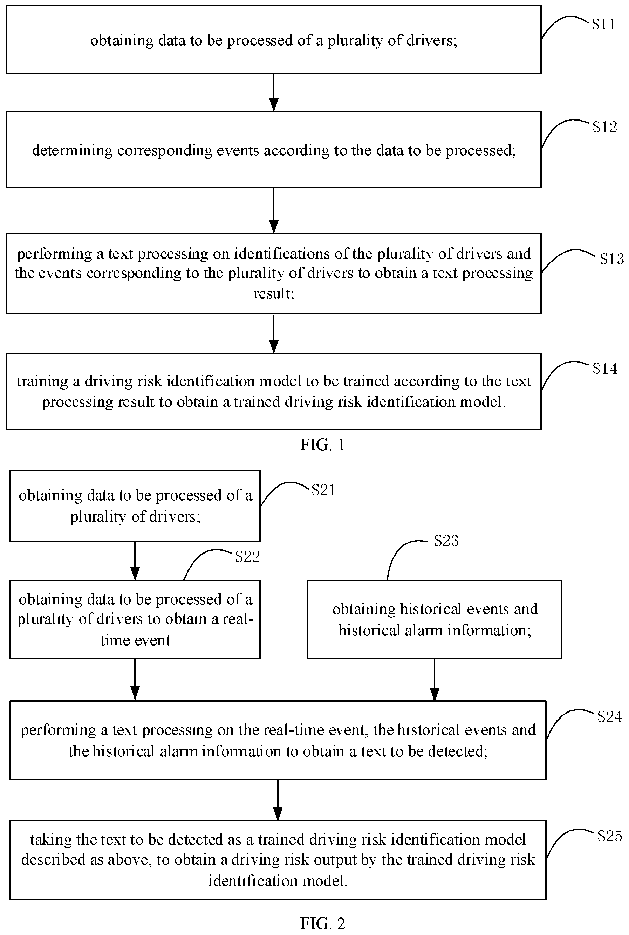

FIG. 1 shows a flow chart of a method for training a driving risk identification model provided by the embodiment of the present application, which can be applied to an electronic apparatus, and is described in detail as follows:

In a step S11, data to be processed of a plurality of drivers are obtained, and the data to be processed includes vehicle data and/or non-vehicle data.

Each driver may correspond to one or more groups of data to be processed, and each group of data to be processed represents relevant data of one driver during a driving process, which includes one or more vehicle data, and/or, includes one or more non-vehicle data. For example, assuming that a driver A drives the vehicle 1 in a first period and obtains a group of data to be processed 1, drives the vehicle 2 in a second period and obtains a group of data to be processed 2, and drives the vehicle 3 in a third period and obtains another group of data to be processed 3, then the driver A corresponds to three groups of data to be processed in the first period, the second period and the third period.

In the present application, vehicle data refers to data generated by the vehicle itself, such as the speed and acceleration of the vehicle, and non-vehicle data refers to data not generated by the vehicle itself, such as video data and audio data collected by installing an additional camera on the vehicle.

In a step S12, corresponding events according to the above-mentioned data to be processed are determined.

Specifically, for each group of data to be processed, the corresponding event is determined, and the number of events may be equal to 1 or greater than 1, and these events are all associated with the driver.

In the embodiment of the present application, the determining conditions corresponding to different events are predetermined. After the data to be processed is obtained, it is analyzed whether the data to be processed matches a predetermined determining condition. If so, it is determined that the event corresponding to the data to be processed is the event corresponding to the matched determining condition.

In a step S13, text processing is performed on the above-mentioned identifications of the plurality of drivers and the above-mentioned events corresponding to the above-mentioned plurality of drivers to obtain a text processing result.

The text processing here includes text vectorization, and the text vectorization is used to convert the text into numerical features so that the subsequent driving risk identification model to be trained can process the numerical features.

In addition to text vectorization, the text processing can also include data cleaning, text standardization and other processing, which will not be repeated here.

In a step S14, the driving risk identification model to be trained is trained according to the above-mentioned text processing result to obtain a trained driving risk identification model, and the above-mentioned driving risk identification model to be trained is a large language model, and the above-mentioned trained driving risk identification model is used to output driving risk.

Specifically, the text processing result is used as the input of the driving risk identification model to be trained to obtain the driving risk output by the driving risk identification model to be trained, the loss value of the driving risk identification model to be trained is calculated according to the output driving risk, and the parameters of the driving risk identification model to be trained are adjusted according to the loss value, and the above steps are repeated until the calculated loss value meets the iteration stop condition, and the iteration is stopped to obtain the trained driving risk identification model.

In the embodiment of the present application, since the data to be processed includes vehicle data and/or non-vehicle data, and the vehicle data and/or non-vehicle data can affect driving risk, determining the events corresponding to the data to be processed is conducive to obtaining information related to driving risk, so that after training the driving risk identification model according to the text processed events and the identification of the driver, it is conducive to improving the accuracy of the driving risk output by the driving risk identification model. Since the driving risk identification model to be trained is a large language model, and the large language model has logical reasoning ability, after training the driving risk identification model to be trained according to the text processing result, the trained driving risk identification model can identify the logical relationship of the input text and output the corresponding driving risk according to the recognition result. That is, since the trained driving risk identification model obtains driving risk not only according to the input text, but also according to the logical relationship of the input text obtained by inferring the logical relationship according to the trained driving risk recognition model, the accuracy of the obtained driving risk is further improved.

In some embodiments, the above-mentioned data to be processed includes vehicle data, and the above-mentioned vehicle data includes an acceleration and/or an angular velocity. The above-mentioned acceleration and angular velocity can be collected from the six-axis sensor of the vehicle, and the above-mentioned step S12 includes:
A1, calculating an acceleration change rate of the acceleration in a case that the vehicle data comprises the acceleration, and determining whether a sudden deceleration event is existed in the vehicle or a sudden acceleration event is existed in the vehicle according to the acceleration change rate;.

The acceleration change rate refers to the acceleration change rate over time. Assuming that acceleration is a function that changes with time, the acceleration change rate can be obtained by taking the time derivative of the function.

In the embodiment of the present application, after the acceleration change rate is obtained according to the acceleration calculation, the acceleration change rate is compared with the preset sudden deceleration threshold value. If the acceleration change rate indicates a decrease in value greater than the sudden deceleration threshold value, it is determined that the vehicle exists a sudden deceleration event. If the acceleration change rate is compared with the preset sudden acceleration threshold value, if the acceleration change rate indicates an increase in value greater than the sudden acceleration threshold value, it is determined that the vehicle exists a sudden acceleration event. Optionally, the absolute value of the sudden acceleration threshold value and the absolute value of the sudden deceleration threshold value may be equal or unequal.

Optionally, considering that different drivers have different driving habits, when determining whether the vehicle exists a sudden acceleration event (or a sudden deceleration event), historical acceleration change rate of the driver of the vehicle and the corresponding traffic accident occurrence situation may be obtained, and the currently calculated acceleration change rate and the obtained historical acceleration change rate and the corresponding traffic accident occurrence situation are combined to determine whether the vehicle exists a sudden acceleration event (or a sudden deceleration event). For example, if the currently calculated acceleration change rate is greater than the sudden acceleration threshold but not greater than the average value of the historical acceleration change rate, and the driver does not have a traffic accident when driving at the average value of the historical acceleration change rate, it is also determined that there is no sudden acceleration event. Since the historical acceleration change rate and the corresponding traffic accident occurrence are combined, it is beneficial to improve the accuracy of the obtained determining result.

A2, calculating an angular velocity change rate of the angular velocity in a case that the vehicle data includes the angular velocity, and determining whether an abnormal posture event is existed in the vehicle according to the angular velocity change rate..

The angular velocity change rate refers to the change rate of the angular velocity over time, that is, the angular acceleration. Assuming that the angular velocity is a function that changes with time, the acceleration change rate can be obtained by calculating the time derivative of the function.

In the embodiment of the present application, after the angular velocity change rate is obtained according to the angular velocity calculation, the angular velocity change rate is compared with the preset angular velocity change rate range. If the angular velocity change rate is not within the angular velocity change rate range, it is determined that the vehicle exists a posture abnormality event.

Optionally, considering that different drivers have different driving habits, when determining whether the vehicle exists an abnormal posture event, the historical angular velocity change rate of the vehicle of the driver and the corresponding traffic accident situation can be obtained, and the currently calculated angular velocity change rate and the obtained historical angular velocity change rate and the corresponding traffic accident situation are combined to determine whether the vehicle exists an abnormal posture event. Since the historical angular velocity change rate and the corresponding traffic accident situation are combined, it is beneficial to improve the accuracy of the obtained determining result.

Optionally, after the acceleration (or angular velocity) is collected, the collected acceleration (or angular velocity) can be filtered to remove noise and improve the accuracy of the acceleration (or angular velocity) involved in the subsequent calculation.

In some embodiments, the data to be processed includes non-vehicle data, and the non-vehicle data includes video data in front of the vehicle. In this case, the step S12 includes:
determining whether an abnormal event of controlling the vehicle to cross a lane line is existed in the vehicle according to the video data in front of the vehicle, and when the abnormal event of controlling the vehicle to cross the lane line is existed, the vehicle crosses the lane line alternately on both sides of the lane line;.

The video data in front of the vehicle can be obtained by collecting the front camera installed on the vehicle for collecting the front of the vehicle.

The video data in front of the vehicle includes information about the environment in front of the vehicle. For example, when the vehicle is driving on a road with a lane line, the video data in front of the vehicle includes information about the lane line. The video data in front of the vehicle may also include information about the road surface boundary of the road, which is not limited here.

In the embodiment of the present application, it can be determined whether the vehicle exists an abnormal event of controlling the vehicle to cross the lane line according to the relative position of the vehicle and the lane line. Specifically, the relative position of the vehicle and the lane line can be determined according to the position of the lane line in the video frame corresponding to the video data and the installation position of the front camera on the vehicle.

Optionally, the above-mentioned determining whether an abnormal event of controlling the vehicle to cross a lane line is existed in the vehicle according to the video data in front of the vehicle includes:
B 1, detecting the lane line according to the video data in front of the vehicle.

Specifically, the presence of the lane line in the video data can be detected according to the color and/or characteristics of the lane line (the lane line in a short distance is a straight line). For example, the position of the lane line can be detected by a pre-trained computer vision deep learning model.

B2, calculating a position change of the vehicle relative to the lane line according to positions of the detected lane line in continuous adjacent video frames corresponding to the video data.

Specifically, considering that the installation position of the front camera relative to the vehicle is unchanged, therefore, when the vehicle does not move, the position of the same lane line in the video frame captured by the front camera is unchanged, and when the vehicle moves, the position of the same lane line in the video frame captured by the front camera changes. Therefore, the relative position relationship between the vehicle and the lane line can be calculated based on the coordinate information of the lane line detected in adjacent video frames and the internal and external parameters of the front camera. This relative position relationship reflects the motion trajectory of the vehicle.

Optionally, considering that some abnormal values may be obtained during the detection of the lane line, that is, the coordinate information of abnormal lane line may be obtained, therefore, in order to improve the accuracy of the obtained position change of the vehicle relative to the lane line, the motion trajectory of the vehicle can be processed in a smooth manner, that is, the relative position relationship between the vehicle and the lane line can be processed in a smooth manner. Among them, the smoothing process here includes smoothing process performed by using Kalman filtering technology, and also includes smoothing process performed by using geometric methods (such as moving average, spline interpolation method), which are not limited here.

B3, determining that the abnormal event of controlling the vehicle to cross the lane line is existed in the vehicle when the position change of the vehicle relative to the lane line indicates that the vehicle crosses the lane line alternately on both sides..

Specifically, it is determined whether the vehicle exists the abnormal event to cross the lane line according to the position change of the vehicle relative to the lane line corresponding to the time series change. For example, assuming that at time tl, the vehicle is located on the left side of the lane line 1, and at time (t1+1), the vehicle is located on the right side of the lane line 1, at time (t1+2), the vehicle is located on the left side of the lane line 1, and at time (t1+3), the vehicle is located on the right side of the lane line 1, then it is determined that the vehicle exists an abnormal event of controlling the vehicle to cross the lane line.

Optionally, it can be determined whether the vehicle exists an abnormal event of controlling the vehicle to cross the lane line by determining whether the position change of the vehicle relative to the lane line (i.e., the motion trajectory of the vehicle) is an "S"-shaped change of crossing the lane line. That is, when it is determined that the motion trajectory of the vehicle is an "S"-shaped, and the "S"-shaped is on the lane line, it is determined that the vehicle exists an abnormal event of controlling the vehicle to cross the lane line.

Since the abnormal event of controlling the vehicle to cross the lane line is analyzed for the video data in front of the vehicle, the existence of the abnormal event of controlling the vehicle to cross the lane line increases the probability of traffic safety accidents, that is, there is a certain driving risk. Therefore, in the embodiment of the present application, the abnormal event of controlling the vehicle to cross the lane line is analyzed to improve the accuracy of the driving risk identification model obtained by subsequent training.

In some embodiments, the data to be processed includes the non-vehicle data, and the non-vehicle data includes video data in front of the vehicle. In this case, the step S12 includes:
determining whether an abnormal event of roadside vehicle control is existed in the vehicle according to the video data in front of the vehicle, and when the abnormal event of roadside vehicle control is existed, a distance between the vehicle and a road boundary exceeds a preset boundary threshold;.

Specifically, it is possible to detect whether there is a road surface boundary in the video data according to the difference between the road surface boundary and the non-road surface boundary of the lane (such as color, material, etc.). For example, the position of the road surface boundary can be detected by a pre-trained computer vision deep learning model.

In the embodiment of the present application, after the road surface boundary is detected, the relative position relationship between the vehicle and the road surface boundary can be calculated according to the coordinate information of the road surface boundary detected in the adjacent video frames corresponding to the video data and the internal and external parameters of the front camera, and the distance between the vehicle and the road surface boundary is determined according to the relative position relationship. The distance is compared with the preset distance threshold. If the distance is greater than the preset distance threshold, it indicates that there is a abnormal event of roadside vehicle control.

Optionally, considering that some abnormal values may be obtained during the detection of the road surface boundary, that is, the coordinate information of the abnormal road surface boundary is obtained, therefore, in order to improve the accuracy of the obtained position change of the vehicle relative to the road surface boundary, the relative position relationship between the vehicle and the road surface boundary can be processed in a smooth manner. Among them, the smoothing processing here includes smoothing processing using Kalman filtering technology, and also includes smoothing processing using geometric methods (such as moving average, spline interpolation method), which are not limited here.

Since the abnormal event of roadside vehicle control analysis is performed on the video data in front of the vehicle, and the existence of the abnormal event of roadside vehicle control will increase the probability of traffic safety accidents, that is, there is a certain driving risk, therefore, in the embodiment of the present application, the abnormal event of roadside vehicle control analysis is conducive to improving the accuracy of the driving risk identification model obtained by subsequent training.

In some embodiments, the data to be processed includes the non-vehicle data, and the non-vehicle data includes video data in front of the vehicle. In this case, the step S12 includes:
determining whether an abnormal event of no deceleration is existed in a front vehicle of the vehicle according to the video data in front of the vehicle, and when the abnormal event of no deceleration is existed in the front vehicle of the vehicle, no deceleration behavior but a collision event is existed in the front vehicle of the vehicle.

Specifically, after the lane line is detected from the video data, the lane line where the vehicle is located and the position of the front vehicle of the vehicle and also in the lane line (assuming it is called the front vehicle) can be determined. For example, the position of the front vehicle in the video frame corresponding to the video data and the position of the lane line in the video frame corresponding to the video data can be detected according to a computer vision deep learning model, and then the actual position of the front vehicle is calculated according to the position of the front vehicle in the video frame corresponding to the video data and the internal and external parameters of the front camera. After the actual position is obtained, it can be determined whether the front vehicle has no deceleration behavior based on the change of the actual position of the front vehicle, or based on the change of the distance between the actual position of the front vehicle and the vehicle. When determining that the front vehicle exists no deceleration behavior, it is also necessary to detect whether the front vehicle exists a collision event, such as determining whether the front vehicle exists a collision event by analyzing the motion trajectory of the front vehicle, or determining whether the front vehicle exists a collision event by analyzing the distance between the front vehicle and other objects. If it is determined that the front vehicle exists a collision event but no deceleration behavior is existed, it is determined that the front vehicle exists an abnormal event of no deceleration.

Optionally, the above-mentioned determining whether an abnormal event of no deceleration is existed in a front vehicle of the vehicle according to the video data in front of the vehicle includes:
C1, calculating a change rate of a speed of the front vehicle of the vehicle according to the video data in front of the vehicle.

Specifically, after calculating a plurality of actual positions of the front vehicle according to the position of the front vehicle in the video frame corresponding to the video data and the internal and external parameters of the front camera, for each actual position, the difference between the actual position and the adjacent actual position is calculated to obtain the actual position difference, and the speed of the front vehicle corresponding to the duration is calculated according to the actual position difference and the duration corresponding to the two actual positions for calculating the actual position difference, and then the change rate of the speed of the front vehicle is calculated according to the at least two speeds of the front vehicle calculated and the duration corresponding to the at least two speeds.

C2, determining whether a deceleration behavior is existed in the front vehicle of the vehicle according to the change rate of the speed of the front vehicle of the vehicle.

Specifically, when it is determined that the change rate of the speed is less than 0, it is determined that the front vehicle of the vehicle exists a deceleration behavior, otherwise, it is determined that no deceleration behavior is existed in the front vehicle of the vehicle.

C3, determining that the abnormal event of no deceleration is existed in the front vehicle of the vehicle when it is determined that the no deceleration behavior but a collision is existed in the front vehicle of the vehicle.

Since the video data in front of the vehicle is analyzed for the no deceleration abnormal event, and the existence of the no deceleration abnormal event will increase the probability of traffic safety accidents, that is, there is a certain driving risk, therefore, in the embodiment of the present application, the no deceleration abnormal event analysis is conducive to improving the accuracy of the driving risk identification model obtained by subsequent training.

In some embodiments, the above-mentioned data to be processed includes the non-vehicle data, and the above-mentioned non-vehicle data includes video data in front of the vehicle. In this case, the above-mentioned step S12 includes:
determining whether an abnormal event of no avoidance vehicle control in the vehicle is existed according to the video data in front of the vehicle, and when the abnormal event of no avoidance vehicle control is existed in the vehicle, a front vehicle of the vehicle is existed a behavior of inserting into a lane where the vehicle is located, and a risk of collision between the vehicle and the front vehicle of the vehicle is existed but no avoidance action is existed in the vehicle.

Specifically, the positions of the vehicle and the lane line in the video frame corresponding to the video data are detected according to the video data in front of the vehicle. When there is a front vehicle of the vehicle and in a lane not in the same lane as the vehicle, it is determined according to the trajectory of the existed vehicle whether the existed vehicle has the behavior of inserting into the lane where the vehicle is located. If so, it is determined whether there is a risk of collision between the vehicle and the existed vehicle, and whether the vehicle exists no avoidance action when there is a risk of collision. The avoidance action here includes at least one of the following: starting emergency braking to slow down or stop the vehicle, starting steering assistance to help the driver avoid obstacles more effectively, and starting lane keeping assistance to stabilize the vehicle in the lane to prevent loss of control due to avoidance.

Optionally, the above-mentioned determining whether an abnormal event of no avoidance vehicle control in the vehicle is existed according to the video data in front of the vehicle includes:
D1, determining a trajectory of a candidate insertion vehicle according to the video data in front of the vehicle, and the candidate insertion vehicle is a front vehicle of the vehicle and in a lane adjacent to a lane where the vehicle is located.

Specifically, when it is determined based on the video data in front of the vehicle that there is a vehicle (i.e., the candidate insertion vehicle) in front of the vehicle and in a lane adjacent to the lane of the vehicle, the actual position of the candidate insertion vehicle at different times is calculated according to the position of the candidate insertion vehicle in the video frame corresponding to the video data and the internal and external parameters of the front camera, and then the trajectory of the candidate insertion vehicle is generated according to the actual position at different times.

Optionally, the abnormal points of the generated trajectory are removed to achieve smoothing processing of the generated trajectory and improve the accuracy of the trajectory of the candidate insertion vehicle finally generated.

D2, determining whether the candidate insertion vehicle is existed an insertion behavior into the lane where the vehicle is located according to the trajectory of the candidate insertion vehicle.

Specifically, determining whether the candidate insertion vehicle has traveled from an adjacent lane to the lane where the vehicle is located according to the trajectory of the candidate insertion vehicle, and if so, determining that the candidate insertion vehicle exists an insertion behavior.

D3, determining whether a collision risk is existed between the vehicle and the candidate insertion vehicle, in a case that the candidate insertion vehicle is existed the insertion behavior into the lane where the vehicle is located.

Specifically, a motion trajectory of the vehicle can be generated to predict whether there is an intersection between the motion trajectory of the vehicle and the trajectory of the candidate insertion vehicle at a future time. If so, it is determined that there is a collision risk between the vehicle and the candidate insertion vehicle. Specifically, when performing trajectory prediction, the possible trajectory of the vehicle in the next few seconds can be predicted according to information such as the current position, speed, acceleration and steering angle of the vehicle in combination with a kinematic model.

D4, in a case that the collision risk is existed between the vehicle and the candidate insertion vehicle, determining whether the vehicle is existed an avoidance action, and determining that the abnormal event of no avoidance vehicle control in the vehicle is existed in a case that the no avoidance action is determined..

The avoiding action may include starting emergency braking and starting steering assistance.

When the avoiding action includes starting emergency braking, whether the emergency braking is started can be determined in the following ways: (1) determining whether the sudden deceleration amplitude of the vehicle exceeds the preset deceleration amplitude threshold; if so, it indicates that the probability of emergency braking is high (the probability of emergency braking is greater than 60%). (2) determining whether the brake light lights up quickly and continuously, if so, it indicates that the probability of emergency braking is high. (3) determining whether the acceleration of the vehicle suddenly changes from a positive value to a negative value, and the deceleration is larger, if so, it indicates that the probability of emergency braking is high.

When the avoiding action includes starting steering assistance, whether the steering assistance is started can be determined in a following way: detecting whether the function switch of the steering assistance is turned on.

The avoidance action may also include other actions, which are not listed here one by one.

Since the video data in front of the vehicle is analyzed for the abnormal event of no avoidance vehicle control, and the presence of abnormal event of no avoidance vehicle control will increase the probability of a traffic safety accident, that is, there is a certain driving risk, therefore, in the embodiment of the present application, the analysis of the abnormal event of no avoidance vehicle control is conducive to improving the accuracy of the driving risk identification model obtained by subsequent training.

It should be noted that among the above-mentioned abnormal event of controlling the vehicle to cross a lane line, the abnormal event of roadside vehicle control, the abnormal event of non-deceleration, and the abnormal event of no avoidance vehicle control, only one event can be detected, or multiple events can be detected, which is not limited here.

In some embodiments, the above-mentioned data to be processed includes the non-vehicle data, and the above-mentioned non-vehicle data includes the video data in the cockpit, and the above-mentioned step S12 includes:
E1, detecting facial key points of a driver according to the video data in the cockpit, the facial key points include feature points corresponding to eyes.

The video data in the cockpit can be obtained by capturing with an in-vehicle camera installed in the vehicle and with the lens facing the driver.

It should be noted that the above-mentioned facial key points can also include feature points corresponding to the nose and the mouth.

Specifically, detecting facial key points refers to determining the two-dimensional coordinates of the facial key points of the video frame corresponding to the video data in the cockpit.

E2, determining a head posture and a sight direction of the driver according to the facial key points.

Specifically, the two-dimensional coordinates of the determined facial key points are mapped to three-dimensional coordinates, and then the rotation and translation vectors of the in-vehicle camera are calculated according to the three-dimensional coordinates and their two-dimensional projections on the video frame, and finally the Euler angles are calculated according to the rotation and translation vectors to obtain the head posture of the driver.

In the embodiment of the present application, the sight direction can be calculated according to feature points such as the eye corner and the pupil position.

E3, determining whether an event that a sight of the driver deviates from a normal driving sight direction is occurred according to the head posture and the sight direction of the driver.

Specifically, the normal driving sight direction is determined according to the head posture of the driver, and the normal driving sight direction is compared with the sight direction of the driver determined according to the feature points such as the eye corner and the pupil position of the driver. If the deviation between the two is larger, it is determined that the sight direction of the driver deviates from the normal driving sight direction event.

In the embodiment of the present application, since the driver relies on his sight to drive the vehicle, it is beneficial to train a more accurate driving risk identification model in the future by analyzing whether the sight direction of the driver deviates from the normal driving sight direction event.

Optionally, considering that in addition to the event that deviates from normal driving sight direction, the driver may also close his eyes, yawn, tilt his head left and right, etc., and these events will affect the driving risk. Therefore, it is also possible to determine whether these events occur based on the obtained facial key points.

Among them, the key points of the eyes in the continuous video frames can be analyzed to determine whether the eyes of the driver are open or closed.

Among them, the key points of the mouth in the continuous video frames can be analyzed to determine whether the driver yawns.

Among them, the head posture of the driver in continuous video frames can be analyzed to determine whether the driver has a left-right head tilt.

In some embodiments, considering that the probability of a traffic accident when the driver is in a drowsy state is greater than the probability of a traffic accident when the driver is not in a drowsy state, therefore, in addition to analyzing the above-listed events, it is also possible to analyze whether the driver occurs a drowsy expression event, and train the driving risk recognition model based on the analysis results of whether the drowsy expression event occurs.

Specifically, a deep learning model for detecting the drowsy expression of the driver can be pre-trained, and the facial expression of the driver in the video data in the cockpit can be recognized according to the deep learning model. If the driver is recognized to have a drowsy expression, and the duration of the drowsy expression is greater than the preset drowsy duration threshold, it is determined that the driver occurs a drowsy expression event.

In some embodiments, the above-mentioned data to be processed includes the non-vehicle data, and the above-mentioned non-vehicle data includes voice data. The above-mentioned step S12 includes:
Fl, detecting whether the voice data meets a preset voice condition, and the preset voice condition includes that the voice data is voice data of the driver.

The voice data here can be collected by a microphone installed in the cockpit. When the voice condition includes that the voice data is the voice data of the driver, the audio features of the driver can be pre-recorded. After the voice data is collected from the microphone, the features of the voice data are determined, and the features of the voice data are compared with the audio features of the driver. If the features of the voice data and the audio features of the driver are matched, it is determined that the collected voice data meets the preset voice condition.

Optionally, considering that when there is a passenger with overheated rhetoric to the driver, the overheated rhetoric may stimulate the driver to make irrational driving behavior. At this time, the driving risk of the vehicle is also high. Therefore, the above-mentioned voice condition may also include: the voice data contains specified words. It should be noted that the voice data at this time is not necessarily the voice data of the driver. That is, when the voice condition includes: the voice data contains specified words, it is determined whether the collected voice data meets the preset voice condition by analyzing whether the collected voice data contains the specified words. In this determining process, it is not necessary to pre-record the audio features of the driver.

F2, in a case that the voice data meets the preset voice condition, determining that a speaking event is existed.

In the embodiment of the present application, considering that the speaking event will affect the driving risk, it is determined whether there is a speaking event, so that the driving risk identification model can be trained according to the determining result later, which is conducive to improving the accuracy of the trained driving risk identification model.

In some embodiments, before the above-mentioned text processing of the above-mentioned identification of the driver and the above-mentioned events corresponding to the above-mentioned driver, the method also includes:

obtaining category information of the plurality of drivers, and the category information is configured to indicate a category to which a driving habit of each of the plurality of drivers belong.

Correspondingly, the above-mentioned text processing of the above-mentioned identification of the driver and the above-mentioned events corresponding to the above-mentioned driver includes:
performing the text processing on the identifications of the plurality of drivers, the events corresponding to the plurality of drivers, and the category information of the plurality of drivers.

Specifically, a plurality of categories are preset, and different categories correspond to different category information (the category information includes the category name and may also include category description information). The category information includes: speeding type, not wearing a seat belt type, not complying with traffic lights type, stable driving type, rapid acceleration type, rapid deceleration type, etc. It should be noted that the category information corresponding to the same driver may be greater than 1. For example, the same driver may belong to both the speeding type and the non-compliance with traffic lights type.

Since the category information is used to indicate the category to which the above-mentioned driving habits of the driver belong, and driving habits are usually difficult to change, and driving habits will affect driving risks, therefore, the category information of the driver is also included when training the driving risk identification model, which is conducive to improving the accuracy of the trained driving risk identification model.

In some embodiments, the above-mentioned step S14 includes:
performing a low-rank adaptation training on the driving risk identification model to be trained according to the text processing result to obtain the trained driving risk identification model.

Among them, low-rank adaptation ( LoRA) training is a technology for fine-tuning large language models. It only trains low-rank matrices and then injects these parameters into the original model to achieve fine-tuning of the original model. This method reduces the computing requirements, making the training resources much smaller than directly training the original model, which is conducive to improving the training speed.

In the embodiment of the present application, the rank r of the two matrices (assuming to be matrix A and matrix B) involved in the LoRA training can be determined randomly, or determined according to the width and depth of the original model (i.e., the driving risk identification model to be trained) and the complexity of the driving risk identification task. Since the expressive power of LoRA training is related to r, when r is determined according to the width and depth of the original model and the complexity of the driving risk identification task, it is beneficial to improve the accuracy of the determined r.

After the trained driving risk identification model is obtained according to the above method, the trained driving risk identification model can be used to identify driving risks.

FIG. 2 shows a flow chart of a driving risk identification method provided in an embodiment of the present application, which is described in detail as follows:
In a step S21, data to be processed of a driver is obtained, and the above-mentioned data to be processed includes vehicle data and/or non-vehicle data.

The data included in the vehicle data here are similar to the data included in the vehicle data above. Similarly, the data included in the non-vehicle data are similar to the data included in the non-vehicle data above, which will not be described in detail here.

In the embodiment of the present application, when the driver is driving the vehicle, the data to be processed of the driver can be obtained so that the driving risk can be estimated later according to the data to be processed. That is, in the embodiment of the present application, the data to be processed obtained is the data to be processed obtained by the same driver in the same driving event.

In a step S22, the corresponding event is determined according to the data to be processed to obtain a real-time event.

The process of determining the real-time event is similar to the process of determining the corresponding event according to the data to be processed, which will not be described in detail here.

In a step S23, historical events and historical alarm information are obtained, and the historical events are events determined before the real-time event is determined.

Specifically, the events determined before the real-time event is determined this time are taken as historical events and obtained. It should be noted that the historical events here include historical events corresponding to a plurality of drivers. For example, before determining the real-time event, the driver in the step S21 exists a determined event, then the historical events here include the event determined by the driver before determining the real-time event.

In the embodiment of the present application, the historical alarm information corresponds to the driving event. For example, assuming that the driver exists a driving event in the time period (t1-t2), and there is alarm information in the time period (t1-t2), then the driving event corresponds to the existing alarm information.

In the embodiment of the present application, the historical alarm information can be obtained according to the feedback of the driver or other staff, or it can be obtained from the reported alarm information.

In a step S24, the real-time event, the historical event and the historical alarm information are processed into text to obtain the text to be detected.

In a step S25, the text to be detected is used as the trained driving risk identification model as described above, and the driving risk output by the trained driving risk identification model is obtained.

In the embodiment of the present application, since the input of the trained driving risk identification model includes a real-time event, historical events and historical alarm information, that is, the input of the trained driving risk identification model includes both real-time information and historical information, when there are fewer real-time events, the output driving risk is mainly affected by historical information, and when there are more real-time events, the real-time events will also affect the output driving risk, that is, the output driving risk is more matched with the driver itself, thereby improving the accuracy of the output driving risk.

In some embodiments, before the step S24, which also includes:
obtaining category information of the plurality of drivers, and the category information is configured to indicate a category to which a driving habit of each of the plurality of drivers belong.

Correspondingly, the above-mentioned step S24 includes:
text processing is performed on the above-mentioned category information of the plurality of drivers, the above-mentioned real-time event, the above-mentioned historical events and the above-mentioned historical alarm information to obtain the text to be detected.

It should be understood that the size of the sequence number of each step in the above embodiment does not mean the order of execution. The execution order of each process should be determined by its function and internal logic, and should not constitute any limitation on the implementation process of the embodiment of the present application.

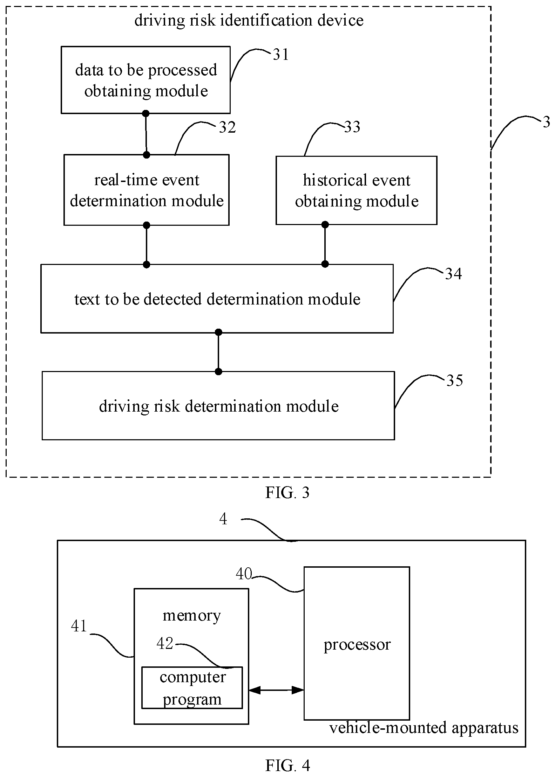

Corresponding to the driving risk identification method described in the above embodiment, FIG. 3 shows a structural block diagram of a driving risk identification device provided by the embodiment of the present application. For the sake of convenience, only the part related to the embodiment of the present application is shown.

As shown in FIG. 3, the driving risk identification device 3 includes: a data to be processed obtaining module 31, a real-time event determination module 32, a historical event obtaining module 33, a text to be detected determination module 34, and a driving risk determination module 35. In particular:

The to-be-processed data obtaining module 31 is configured to obtain data to be processed of a driver, and the data to be processed comprises vehicle data and/or non-vehicle data.

The real-time event determination module 32 is configured to determine a corresponding event according to the data to be processed to obtain a real-time event.

The historical event obtaining module 33 is configured to obtain historical events and historical alarm information, and the historical events are events determined before the real-time event is determined.

The text to be detected determination module 34 is configured to perform a text processing on the real-time event, the historical events and the historical alarm information to obtain a text to be detected.

The driving risk determination module 35 is configured to take the text to be detected as a trained driving risk identification model according to any one of claims 1 to 10, to obtain a driving risk output by the trained driving risk identification model.

In the embodiment of the present application, since the input of the trained driving risk identification model includes a real-time event, historical events and historical alarm information, that is, the input of the trained driving risk identification model includes both real-time information and historical information, when there are fewer real-time events, the output driving risk is mainly affected by historical information, and when there are more real-time events, the real-time events will also affect the output driving risk, that is, the output driving risk is more matched with the driver itself, thereby improving the accuracy of the output driving risk.

In some embodiments, the driving risk identification device 3 includes:
a category information obtaining module, which is configured to obtain the category information of the driver, and the above-mentioned category information is configured to indicate the category to which the above-mentioned driving habits of the driver belong.

Correspondingly, the above-mentioned text to be detected determination module 34 is specifically configured to:
perform text processing on the above-mentioned category information of the driver, the above-mentioned real-time events, the above-mentioned historical events and the above-mentioned historical alarm information to obtain the text to be detected.

It should be noted that the information interaction, execution process and other contents between the above-mentioned devices/units are based on the same concept as the method embodiment of the present application. For their specific functions and technical effects, refer to the method embodiment part, and no further description is given here.

FIG. 4 is a schematic diagram of the structure of a vehicle-mounted apparatus provided in an embodiment of the present application. As shown in FIG. 4, the vehicle-mounted apparatus 4 of the embodiment includes: at least one processor 40 (only one processor is shown in FIG. 4), a memory 41, and a computer program 42 stored in the memory 41 and executable on the at least one processor 40. When the processor 40 executes the computer program 42, the steps in any of the above-mentioned method embodiments are implemented.

The vehicle-mounted apparatus 4 can be a computing device such as a desktop computer, a notebook, a PDA and a cloud server. The vehicle-mounted apparatus can include, but is not limited to, a processor 40 and a memory 41. Those skilled in the art can understand that FIG. 4 is only an example of the vehicle-mounted apparatus 4 and does not constitute a limitation on the vehicle-mounted apparatus 4. It can include more or fewer components than shown in the figure, or combine certain components, or different components, for example, it can also include input and output devices, network access devices, etc.

The processor 40 may be a Central Processing Unit (CPU), or other general-purpose processor, Digital Signal Processor (DSP), Application Specific Integrated Circuit (ASIC), Field-Programmable Gate Array (FPGA) or other programmable logic device, discrete gate or transistor logic device, discrete hardware component, etc. A general-purpose processor may be a microprocessor or the processor may be any conventional processor, etc.

In some embodiments, the memory 41 may be an internal storage unit of the vehicle-mounted apparatus 4, such as a hard disk or memory of the vehicle-mounted apparatus 4. In other embodiments, the memory 41 may also be an external storage device of the vehicle-mounted apparatus 4, such as a plug-in hard disk, a Smart Media Card (SMC), a Secure Digital (SD) card, a Flash Card, etc. equipped on the vehicle-mounted apparatus 4. Further, the memory 41 may include both an internal storage unit of the vehicle-mounted apparatus 4 and an external storage device. The memory 41 is used to store operating systems, applications, Boot Loaders, data and other programs, such as program codes of the computer programs. The memory 41 can also be used to temporarily store data that has been output or is to be output.

Those skilled in the art can clearly understand that for the convenience and simplicity of description, only the division of the above-mentioned functional units and modules is used as an example. In practical applications, the above-mentioned functions can be assigned to different functional units and modules as needed, that is, the internal structure of the device can be divided into different functional units or modules to complete all or part of the functions described above. The functional units and modules in the embodiment can be integrated into a processing unit, or each unit can exist physically separately, or two or more units can be integrated into one unit. The above-mentioned integrated unit can be implemented in the form of hardware or in the form of software functional units. In addition, the specific names of the functional units and modules are only for the convenience of distinguishing each other, and are not used to limit the scope of protection of the present application. The specific working process of the units and modules in the above-mentioned system can refer to the corresponding process in the above-mentioned method embodiment, and will not be repeated here.

The embodiment of the present application also provides a network device, the network device comprising: at least one processor, a memory, and a computer program stored in the memory and executable on the at least one processor. The processor implements the steps in any of the above-mentioned method embodiments when executing the computer program.

The embodiment of the present application also provides a computer-readable storage medium. The computer-readable storage medium stores a computer program. The computer program can implement the steps in the above-mentioned method embodiments when executed by the processor.

The embodiment of the present application provides a computer program product. When the computer program product is run on a vehicle-mounted apparatus, the vehicle-mounted apparatus can implement the steps of the above-mentioned various method embodiments when executing.

If the integrated unit is achieved in the form of software functional units, and is sold or used as an independent product, it can be stored in a computer readable storage medium. Based on this understanding, a whole or part of flow process of implementing the method in the aforesaid embodiments of the present application can also be accomplished by using computer program to instruct relevant hardware. When the computer program is executed by the processor, the steps in the various method embodiments described above can be implemented. Wherein, the computer program comprises computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc. It needs to be explained that, the contents contained in the computer readable medium can be added or reduced appropriately according to the requirement of legislation and patent practice in a judicial district, for example, in some judicial districts, according to legislation and patent practice, the computer readable medium doesn't include electrical carrier signal and telecommunication signal.

In the aforesaid embodiments, the description of each of the embodiments is emphasized respectively, regarding a part of one embodiment which isn't described or disclosed in detail, please refer to relevant descriptions in some other embodiments.

Those skilled in the art may aware that, the elements and algorithm steps of each of the examples described in connection with the embodiments disclosed herein can be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

In the embodiments provided in the present application, it should be understood that the disclosed device/network device and method can be implemented in other ways. For example, the device described above are merely illustrative; for example, the division of the units is only a logical function division, and other division could be used in the actual implementation, for example, multiple units or components could be combined or integrated into another system, or some features can be ignored, or not performed. In another aspect, the coupling or direct coupling or communicating connection shown or discussed could be an indirect, or a communicating connection through some interfaces, devices or units, which could be electrical, mechanical, or otherwise.

The units described as separate components could or could not be physically separate, the components shown as units could or could not be physical units, which can be located in one place, or can be distributed to multiple network elements. Parts or all of the elements could be selected according to the actual needs to achieve the object of the present embodiment.

It should be noted that the information collection process (such as face image collection process, fingerprint information collection process, etc.)/feature extraction process involved in the present application is performed with the knowledge and permission of the user, that is, the information collection process/feature extraction process complies with the requirements of laws and regulations and does not constitute an act that harms the public interest.

The above-described embodiments are only used to illustrate the technical solutions of the present application, rather than to limit them. Although the present application has been described in detail with reference to the aforementioned embodiments, a person of ordinary skill in the art should understand that the technical solutions described in the aforementioned embodiments can still be modified, or some of the technical features thereof can be replaced by equivalents. Such modifications or replacements do not deviate the essence of the corresponding technical solutions from the spirit and scope of the technical solutions of the embodiments of the present application, and should all be included in the protection scope of the present application.

## Claims

1. A method for training a driving risk identification model, comprising:
obtaining data to be processed of a plurality of drivers, wherein the data to be processed comprises vehicle data and/or non-vehicle data;
determining corresponding events according to the data to be processed;
performing a text processing on identifications of the plurality of drivers and the events corresponding to the plurality of drivers to obtain a text processing result; and
training a driving risk identification model to be trained according to the text processing result to obtain a trained driving risk identification model, wherein the driving risk identification model to be trained is a large language model, and the trained driving risk identification model is configured to output a driving risk.

2. The method for training the driving risk identification model according to claim 1, wherein the data to be processed comprises the vehicle data, the vehicle data comprises an acceleration and/or an angular velocity, and the step of determining the corresponding events according to the data to be processed comprises:
calculating an acceleration change rate of the acceleration in a case that the vehicle data comprises the acceleration, and determining whether a sudden deceleration event is existed in the vehicle or a sudden acceleration event is existed in the vehicle according to the acceleration change rate; and
calculating an angular velocity change rate of the angular velocity in a case that the vehicle data comprises the angular velocity, and determining whether an abnormal posture event is existed in the vehicle according to the angular velocity change rate.

3. The method for training the driving risk identification model according to claim 1, wherein the data to be processed comprises the non-vehicle data, the non-vehicle data comprises video data in front of the vehicle, and step of determining the corresponding events according to the data to be processed comprises:
determining whether an abnormal event of controlling the vehicle to cross a lane line is existed in the vehicle according to the video data in front of the vehicle, wherein when the abnormal event of controlling the vehicle to cross the lane line is existed, the vehicle crosses the lane line alternately on both sides of the lane line;
and/or,
determining whether an abnormal event of roadside vehicle control is existed in the vehicle according to the video data in front of the vehicle, wherein when the abnormal event of roadside vehicle control is existed, a distance between the vehicle and a road boundary exceeds a preset boundary threshold;
and/or,
determining whether an abnormal event of no deceleration is existed in a front vehicle of the vehicle according to the video data in front of the vehicle, wherein when the abnormal event of no deceleration is existed in the front vehicle of the vehicle, no deceleration behavior but a collision event is existed in the front vehicle of the vehicle;
and/or,
determining whether an abnormal event of no avoidance vehicle control in the vehicle is existed according to the video data in front of the vehicle, wherein when the abnormal event of no avoidance vehicle control is existed in the vehicle, a front vehicle of the vehicle is existed a behavior of inserting into a lane where the vehicle is located, and a risk of collision between the vehicle and the front vehicle of the vehicle is existed but no avoidance action is existed in the vehicle.

4. The method for training the driving risk identification model according to claim 3, wherein the step of determining whether the abnormal event of controlling the vehicle to cross the lane line is existed in the vehicle according to the video data in front of the vehicle:
detecting the lane line based on the video data in front of the vehicle;
calculating a position change of the vehicle relative to the lane line according to positions of the detected lane line in continuous adjacent video frames corresponding to the video data; and
determining that the abnormal event of controlling the vehicle to cross the lane line is existed in the vehicle when the position change of the vehicle relative to the lane line indicates that the vehicle crosses the lane line alternately on both sides.

5. The method for training the driving risk identification model according to claim 3, wherein the step of determining whether the abnormal event of no deceleration is existed in the front vehicle of the vehicle according to the video data in front of the vehicle comprises:
calculating a change rate of a speed of the front vehicle of the vehicle according to the video data in front of the vehicle;
determining whether a deceleration behavior is existed in the front vehicle of the vehicle according to the change rate of the speed of the front vehicle of the vehicle;
determining that the abnormal event of no deceleration is existed in the front vehicle of the vehicle when it is determined that the no deceleration behavior but a collision is existed in the front vehicle of the vehicle.

6. The method for training the driving risk identification model according to claim 3, wherein the step of determining whether the abnormal event of no avoidance vehicle control in the vehicle is existed according to the video data in front of the vehicle comprises:
determining a trajectory of a candidate insertion vehicle according to the video data in front of the vehicle, wherein the candidate insertion vehicle is a front vehicle of the vehicle and in a lane adjacent to a lane where the vehicle is located;
determining whether the candidate insertion vehicle is existed an insertion behavior into the lane where the vehicle is located according to the trajectory of the candidate insertion vehicle;
determining whether a collision risk is existed between the vehicle and the candidate insertion vehicle, in a case that the candidate insertion vehicle is existed the insertion behavior into the lane where the vehicle is located; and
in a case that the collision risk is existed between the vehicle and the candidate insertion vehicle, determining whether the vehicle is existed an avoidance action, and determining that the abnormal event of no avoidance vehicle control in the vehicle is existed in a case that the no avoidance action is determined.

7. The method for training the driving risk identification model according to claim 1, wherein the data to be processed comprises the non-vehicle data, the non-vehicle data comprises video data in a cockpit, and the the step of determining the corresponding events according to the data to be processed comprises:
detecting facial key points of a driver according to the video data in the cockpit, the facial key points comprise feature points corresponding to eyes;
determining a head posture and a sight direction of the driver according to the facial key points; and
determining whether an event that a sight of the driver deviates from a normal driving sight direction is occurred according to the head posture and the sight direction of the driver.

8. The method for training the driving risk identification model according to claim 1, wherein the data to be processed comprises the non-vehicle data, the non-vehicle data comprises voice data, and the step of determining the corresponding events according to the data to be processed comprises:
detecting whether the voice data meets a preset voice condition, wherein the preset voice condition comprises that the voice data is voice data of the driver; and
in a case that the voice data meets the preset voice condition, determining that a speaking event is existed.

9. The method for training the driving risk identification model according to any one of claims 1 to 8, wherein before the step of performing the text processing on identifications of the plurality of drivers and the events corresponding to the plurality of drivers, the method further comprises:
obtaining category information of the plurality of drivers, wherein the category information is configured to indicate a category to which a driving habit of each of the plurality of drivers belong;
the step of performing the text processing on identifications of the plurality of drivers and the events corresponding to the plurality of drivers comprises:
performing the text processing on the identifications of the plurality of drivers, the events corresponding to the plurality of drivers, and the category information of the plurality of drivers.

10. The method for training a driving risk identification model according to any one of claims 1 to 8, wherein the step of training of the driving risk identification model to be trained according to the text processing result to obtain the trained driving risk identification model comprises:
performing a low-rank adaptation training on the driving risk identification model to be trained according to the text processing result to obtain the trained driving risk identification model.

11. A driving risk identification method, comprising:
obtaining data to be processed of a driver, wherein the data to be processed comprises vehicle data and/or non-vehicle data;
determining a corresponding event according to the data to be processed to obtain a real-time event;
obtaining historical events and historical alarm information, wherein the historical events are events determined before the real-time event is determined;
performing a text processing on the real-time event, the historical events and the historical alarm information to obtain a text to be detected; and
taking the text to be detected as a trained driving risk identification model according to any one of claims 1 to 10, to obtain a driving risk output by the trained driving risk identification model.

12. A driving risk identification device, comprising:
a data to be processed obtaining module, configured to obtain data to be processed of a driver, wherein the data to be processed comprises vehicle data and/or non-vehicle data;
a real-time event determination module, configured to determine a corresponding event according to the data to be processed to obtain a real-time event;
a historical event obtaining module, configured to obtain historical events and historical alarm information, wherein the historical events are events determined before the real-time event is determined;
a text to be detected determination module, configured to perform a text processing on the real-time event, the historical events and the historical alarm information to obtain a text to be detected; and
a driving risk determination module, configured to take the text to be detected as a trained driving risk identification model according to any one of claims 1 to 10, to obtain a driving risk output by the trained driving risk identification model.

13. A vehicle-mounted apparatus, comprising a memory, a processor, and a computer program stored in the memory and executable on the processor, wherein the processor implements the method according to any one of claims 1 to 10 when executing the computer program.

14. A computer-readable storage medium, wherein the computer-readable storage medium stores a computer program, wherein the computer program implements the method according to any one of claims 1
to 10 when executed by the processor.

15. A computer program product, comprising a computer program, wherein the computer program implements the method according to any one of claims 1 to 10 when executed by the processor.
